# FASCICULE DE BREVET EUROPEEN

(11) **EP 0 408 454 B1**
(45) Date de publication et mention de la délivrance du brevet: **08.09.1993**
(21) Numéro de dépôt: 90402007.0
(22) Date de dépôt: 12.07.1990
(51) Int. Cl.: F16N 7/36, F16N 27/00, F01D 25/18

(54) **Dispositif de limitation de débit de lubrifiant au travers d'un arbre en rotation**
Vorrichtung zum Begrenzen des Öldurchflusses in einer rotierenden Welle
Device for restricting the oil flow in a rotating shaft

(30) Priorité: 12.07.1989 FR 8909370
(43) Date de publication de la demande: 16.01.1991
(73) Titulaire: HISPANO-SUIZA Société anonyme dite:, F-92213 Saint Cloud (FR)
(72) Inventeur: Mangas, Claude, F-78500 Sartrouville (FR); Truyen, Gérard, F-27510 Pressagny l'Orgueilleux (FR)
(74) Mandataire: Berrou, Paul

(56) Documents cités:
- FR-A- 1 095 697
- FR-A- 2 005 008
- FR-A- 2 328 158
- FR-A- 2 543 654
- GB-A- 989 477
- US-A- 2 874 803
- US-A- 2 999 000

## Description

Dans certains ensembles mécaniques, il est connu de distribuer de l'huile de lubrification aux divers composants de l'ensemble, par un passage axial traversant un arbre en rotation.

L'huile est admise sous forme d'un jet depuis un gicleur fixe vers une extrémité du passage axial de l'arbre puis progresse le long du passage, en étant plaquée par la force centrifuge le long des parois de ce passage, jusqu'à des orifices radiaux de l'arbre, par lesquels elle s'écoule hors de l'arbre vers des zones ou organes à lubrifier.

Des modes de réalisation de tels dispositifs de distribution sont illustrés dans les documents FR-A-1 095 697, FR-A-2 005 008 ou FR-A-2 328 158, dont le premier décrit toutes les caracteristiques du préambule de la revendication 1.

Dans tous ces modes de réalisation, le débit de lubrifiant est uniquement fixé par le débit imposé par le gicleur, de sorte qu'il peut y avoir un excédent de lubrifiant, ce qui n'est parfois pas souhaitable.

Dans le brevet US-A-2 874 803, on prévoit que le jet de lubrifiant ne puisse pénétrer vers l'intérieur de l'arbre qu'au travers de lumières ménagées dans l'arbre et tournant avec lui. Grâce à cet arrangement, on peut limiter dans une certaine mesure le débit de lubrifiant admis dans l'arbre, mais celui-ci reste essentiellement fonction du débit fourni par le gicleur.

FR-A-2 543 654 décrit un système dans lequel un arbre-fourreau comporte des ouvertures radiales d'alimentation en huile vers un distributeur constitué d'une pièce d'arbre et d'un déflecteur qui dirige l'huile vers le centre de l'arbre avant sa centrifugation.

Conformément à l'invention, un dispositif de limitation de débit de lubrifiant au travers d'un passage axial d'un arbre en rotation, ledit lubrifiant étant fourni par une source constituée par un gicleur placé en regard de l'extrémité de l'arbre, comprend un organe formant cloison transversale fixé dans ledit passage axial et présentant une face interne tournée vers ledit passage et une face externe tournée vers une source de lubrifiant, une cavité dans ladite cloison transversale, au moins un orifice d'entrée entre la face externe et la cavité, au moins un orifice d'évacuation entre la face externe et la cavité, situé à une première distance de l'axe, et au moins un orifice de sortie entre la face interne et la cavité, situé à une seconde distance de l'axe, supérieure à la première, l'orifice de sortie ayant une section prédéterminée, les orifices d'entrée, de sortie et d'évacuation étant tous disposés selon une même direction parallèle à l'axe de l'arbre lubrifié.

Ainsi, grâce à l'invention, le jet d'huile fourni par le gicleur pénète dans la cavité de la cloison en traversant l'orifice d'entrée chaque fois que celui-ci se présente en regard du gicleur au cours de la rotation de l'arbre; l'huile se répand uniformément sur le pourtour de la cavité sous l'influence de la force centrifuge. Lorsque le niveau d'huile accumulée dans la cavité atteint radialement la distance de l'orifice de sortie, l'huile commence à s'écouler vers le passage de l'arbre; le débit d'huile admis par l'orifice d'entrée étant excédentaire, le niveau d'huile dans la cavité dépasse l'orifice de sortie, atteint l'orifice d'évacuation et se stabilise au niveau de cet orifice d'évacuation puisque toute quantité excédentaire est renvoyée vers la face extérieure de la cloison par cet orifice.

Le débit d'huile s'écoulant par l'orifice de sortie vers le passage axial de l'arbre est ainsi limité avec précision en fonction, d'une part, de la section de l'orifice de sortie et, d'autre part, de l'épaisseur d'huile entre l'orifice de sortie et l'orifice d'évacuation et en fonction, bien entendu, de la vitesse de rotation de l'arbre. Ce débit est de plus pratiquement indépendant de la différence entre les pressions régnant de part et d'autre du limiteur.

Les détails et avantages de la présente invention seront mieux compris à la lecture de la description qui va suivre, en se référant aux dessins annexés, dans lesquels :
- la figure 1 est une vue en coupe axiale d'un arbre tournant auquel est associé un dispositif conforme à l'invention;
- la figure 2 est une vue partielle en coupe axiale et à plus grande échelle de l'élément essentiel du dispositif;
- la figure 3 est une vue partielle latérale de l'élément de la figure 2; et
- la figure 4 est une vue partielle d'un détail d'invention.

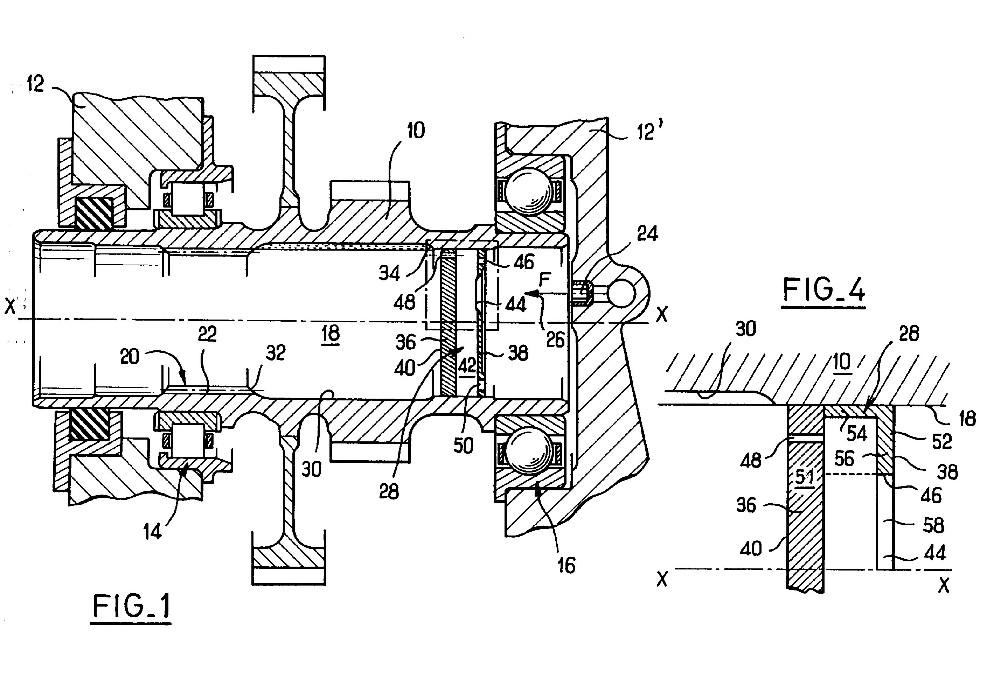

Comme illustré à la figure 1, un arbre 10 d'axe X-X est monté tournant dans un boîtier 12, 12' par l'intermédiaire de paliers 14, 16.

Un passage axial 18 traverse l'arbre 10 afin de constituer, entre autres, un trajet d'écoulement pour un liquide de lubrification vers des organes associés mécaniquement avec l'arbre.

Par ailleurs, le passage 18 comporte un tronçon 20 muni de cannelures internes 22 destinées à engrener avec des cannelures externes d'un arbre d'entraînement, non représenté, pénétrant dans le passage 18 de l'arbre 10 par l'extrémité située à gauche à la figure.

Le liquide de lubrification est fourni par un gicleur fixe 24 monté sur le boîtier en regard de l'autre extrémité de l'arbre 10, à droite à la figure, sous forme d'un jet 26 sensiblement parallèle à l'axe X-X, symbolisé par la flèche F. Le gicleur peut être distant de l'axe X-X, comme l'illustre la figure, ou encore être placé sur l'axe X-X.

Dans le passage 18 face au gicleur 24, est fixé un limiteur de débit 28 conforme à la présente invention et décrit plus en détail par la suite.

Entre le limiteur de débit et le tronçon cannelé du passage, celui-ci comporte une section évasée 30 formant une zone d'accumulation et de distribution de liquide de lubrification, entre les deux barrages formés aux extrémités de la section évasée, un barrage aval 32 du côté du tronçon cannelé 20, d'une part, et un barrage amont 34 du côté du limiteur de débit, d'autre part.

Comme connu, le liquide ayant franchi le limiteur de débit vers la partie gauche du passage se répand sur le pourtour de la section évasée du passage sous l'effet de la force centrifuge et s'écoule globalement longitudinalement lorsque son niveau dépasse celui du barrage aval 32.

Dans les dispositifs traditionnels, le gicleur 24 projette le liquide directement vers la zone évasée 30 du passage 18, de sorte que le débit de liquide y est égal à celui du gicleur 24. Dans la mesure où le débit fourni par un gicleur est difficilement réglable, on a coutume de fixer un débit excédentaire par rapport aux besoins, ce qui n'est pas toujours souhaitable.

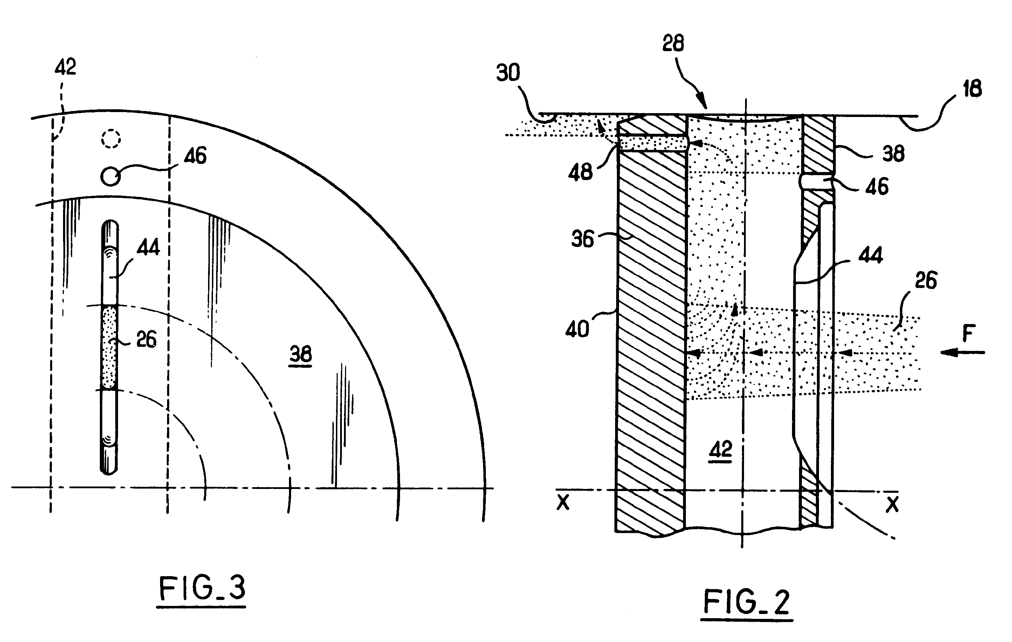

Le limiteur de débit 28 conforme à l'invention et illustré en détail aux figures 2 et 3 comprend une cloison 36 fixée transversalement dans le passage 18 au voisinage de son extrémité de droite à la figure, de telle sorte que cette cloison présente une face externe 38 en regard du gicleur 24 et une face interne 40 en regard du passage 18.

La cloison 36 comporte une cavité intérieure 42, par exemple comme illustré, un perçage cylindrique diamétral traversant la cloison 36 de part en part et situé perpendiculairement à l'axe X-X.

Un orifice d'entrée 44 ménagé dans la face externe 38 de la cloison communique avec la cavité 42. Comme illustré particulièrement à la figure 3, cet orifice d'entrée peut consister en une entaille radiale formant un orifice allongé, approximativement centrée par rapport au gicleur. De la sorte, à chaque tour de l'arbre, l'entaille passe une fois devant le gicleur et une certaine quantité de liquide est admise vers la cavité 42.

Un orifice d'évacuation 46 ménagé également dans la face externe 38 de la cloison 36 communique avec la cavité 42 et un orifice de sortie 48 ménagé dans la face interne 40 de la cloison communique avec la cavité 42.

L'orifice d'évacuation 46 est situé à une première distance prédéterminée de l'axe X-X et l'orifice de sortie 48 est situé à une seconde distance prédéterminée du même axe X-X, supérieure à la première. L'orifice de sortie 48 a une section relativement faible, de telle sorte que le liquide rejeté vers les extrémités de la cavité 42 sous l'effet de la force centrifuge s'y accumule jusqu'à dépasser radialement en direction de l'axe X-X le niveau de l'orifice de sortie 48 jusqu'à atteindre le niveau de l'orifice d'évacuation 46.

Ainsi, le débit de liquide de lubrification traversant l'orifice de sortie 48 sera limité avec précision.

Ce débit sera fonction de plusieurs paramètres que l'on pourra choisir lors de la conception de l'arbre :
- vitesse de rotation de l'arbre,
- section et longueur de l'orifice de sortie 48,
- distances de l'orifice de sortie 48 et de l'orifice d'évacuation 46 par rapport à l'axe X-X.

Dans le mode de réalisation illustré, la cloison comporte un second orifice d'évacuation 50 dans une zone diamétralement opposée au premier orifice d'évacuation. Ce second orifice est destiné à éviter que le niveau de liquide de lubrification qui s'accumule à cette extrémité de la cavité 42 ne se rapproche de l'axe et sert donc à maintenir la quantité de liquide sensiblement égale à celle qui demeure en permanence à l'autre extrémité de la cavité, pour assurer un bon équilibrage de l'arbre.

Comme bien connu des hommes de métier, l'équilibrage de la cloison 36, par rapport à l'axe de rotation, sera assuré par des mesures appropriées.

On remarquera que le débit d'huile est pratiquement indépendant de la différence entre les pressions régnant de part et d'autre de la cloison 36.

Le débit sera même assuré si la pression régnant du côté de la face interne 40 de la cloison est supérieure à celle qui règne du côté de la face externe 38.

Bien entendu, l'invention pourra faire l'objet de nombreuses variantes à la portée de l'homme de métier :
- l'orifice d'entrée 44 peut être placé au centre de la cloison 36,
- au lieu d'un orifice d'entrée 44 unique, on pourra en prévoir deux ou plusieurs, régulièrement répartis autour de l'axe X-X,
- de même, on pourra prévoir plusieurs orifices de sortie 48 et/ou plusieures orifices d'évacuation 46, régulièrement répartis autour de l'axe X-X.

Selon une variante particulièrement simplifiée, illustrée à la figure 4, la cavité 42 a une forme de révolution autour de l'axe X-X, par exemple en réalisant la cloison 36 en deux pièces accolées : un disque plat 51 traversé par le ou les orifices de sortie 48 et une collerette 52 présentant une couronne cylindrique extérieure 54 et une couronne radiale 56 rentrante évidée par un trou circulaire 58 en son centre. La partie centrale du trou forme l'orifice d'entré 44, tandis que le bord du trou forme l'orifice d'évacuation 46.

Grâce à l'invention, non seulement le débit d'huile ou liquide de lubrification admis vers les organes à lubrifier est limité au débit exactement nécessaire mais, en outre, en cas de défaillance des joints ou autres dispositifs d'étanchéité situés sur le circuit, la perte d'huile ne pourra dépasser le débit imposé par le limiteur.

## Revendications

1. Dispositif (28) de limitation de débit d'un lubrifiant au travers d'un passage axial (18) d'un arbre (10) en rotation, ledit lubrifiant étant fourni par une source (24) constituée par un gicleur placé en regard de l'extrémité de l'arbre (10) caractérisé en ce qu'il comprend un organe (36) formant cloison transversale, fixé dans ledit passage axial et présentant une face interne (40) tournée vers le passage (18) et une face externe (38) tournée vers ladite source (24) de lubrifiant, une cavité (42) dans ladite cloison (36), au moins un orifice d'entrée (44) entre la face externe (38) et la cavité (42), au moins un orifice d'évacuation (46) entre la face externe (38) et la cavité (42) et situé à une première distance de l'axe (X-X) de l'arbre (10), et au moins un orifice de sortie (48) entre la face interne (40) et la cavité (42) et situé à une seconde distance de l'axe (X-X) de l'arbre (10) supérieure à la première distance, l'orifice de sortie (48) ayant une section prédéterminée, les orifices d'entrée (44), de sortie (48) et d'évacuation (46) étant tous disposés selon une même direction parallèle à l'axe de l'arbre (10) lubrifié.

2. Dispositif de limitation de débit de lubrifiant selon la revendication 1 dans lequel ledit organe (36) formant cloison est constitué par un disque plat (51) traversé par au moins ledit orifice de sortie (48) et par une pièce en forme de U ou collerette (52) comportant un trou central (58) qui forme du moins ledit orifice d'entrée (44) et au moins ledit orifice d'évacuation (46).

3. Dispositif de limitation de débit d'un lubrifiant selon la revendication 1 dans lequel l'orifice d'entrée (44) présente la forme d'une entaille radiale allongée entre la face externe (38) de cloison et la cavité (42).

4. Dispositif de limitation de débit d'un lubrifiant selon l'une des revendications 1 ou 3 dans lequel les orifices d'entrée (44) et d'évacuation (46) ont une forme circulaire.

## Patentansprüche

1. Vorrichtung (28) zum Begrenzen des Durchflusses eines Schmieröls durch einen axialen Durchlaß (18) einer rotierenden Welle (10), wobei das genannte Schmieröl von einer Quelle (24) abgegeben wird, die von einer gegenüber dem Ende der Welle (10) angeordneten Düse gebildet wird,
dadurch gekennzeichnet,
daß sie aus einem Organ (36), das eine Querwand bildet, die in dem genannten axialen Durchlaß befestigt ist und eine Innenseite (40) aufweist, die dem genannten Durchlaß (18) zugekehrt ist, sowie eine Außenwand (38), die der genannten Quelle (24) zugekehrt ist; aus einer Aussparung (42) in der genannten Querwand (36); aus wenigstens einer Einlaßöffnung (44) zwischen der Außenseite (38) und der Aussparung (42); aus wenigstens einer in einem ersten Abstand von der Achse (X-X) der Welle (10) befindlichen Entleerungsöffnung (46) zwischen der Außenseite (38) und der Aussparung (42) und aus wenigstens einer in einem zweiten Abstand von der Achse (X-X) der Welle (10) befindlichen Auslaßöffnung (48) zwischen der Innenseite (40) und der Aussparung (42) besteht, wobei der zweite Abstand größer ist als der erste Abstand, und wobei die Auslaßöffnung (48) einen vorbestimmten Querschnitt hat, wobei die Einlaß- (44), Auslaß- (48) und Entleerungsöffnungen (46) alle in der gleichen Richtung angeordnet sind, die parallel zur Achse der geschmierten Welle (10) verläuft.

2. Vorrichtung zum Begrenzen des Schmieröldurchflusses nach Anspruch 1, bei der das genannte, eine Trennwand bildende Organ (36) aus einer flachen Scheibe (51), durch die wenigstens die genannte Auslaßöffnung (48) verläuft, und aus einem U-förmigen Teil oder Kragen (52) besteht, der ein zentrales Loch (58) aufweist, das wenigstens die genannte Einlaßöffnung (44) und wenigstens die genannte Entleerungsöffnung (46) bildet.

3. Vorrichtung zum Begrenzen des Schmieröldurchflusses nach Anspruch 1, bei der die Einlaßöffnung (44) die Form eines länglichen, radialen Einschnitts zwischen der Außenseite (38) der Wand und der Aussparung (42) hat.

4. Vorrichtung zum Begrenzen des Schmieröldurchflusses nach einem der Ansprüche 1 oder 3, bei der die Einlaßöffnung (44) und die Entleerungsöffnung (46) kreisförmig sind.

## Claims

1. Device (28) for limiting the flow of a lubricant through an axial passage ( 18) in a shaft ( 10) in rotation, the said lubricant being supplied by a source (24) constituted by a nozzle placed facing the end of the shaft (10), characterised in that it comprises an organ (36) forming a cross partition fixed in the said axial passage and presenting an inner face (40) turned towards the passage (18) and an outer face (38) turned towards the said source of lubricant (24), a cavity (42) in the said partition (36), at least one inlet hole (44) between the outer face (38) and the cavity (42), at least one discharge hole (46) between the outer face (38) and the cavity (42) and situated at a first distance from the axis x-x of the shaft ( 10), and at least one outlet hole (48) situated between the inner face (40) and the cavity (42) and situated at a second distance from the axis x-x of the shaft ( 10) greater than the first distance, the outlet hole (48) having a predetermined cross-section, the inlet (44), outlet (48)and discharge (46) holes all being arranged in accordance with the same direction parallel to the axis of the shaft ( 10) being lubricated.

2. Device for limiting the flow of a lubricant in accordance with Claim 1 in which the said organ (36) forming a partition is constituted by a flat disc (51 ) pierced by at least the said outlet hole (48) and a part in the form of a U or collar (52) comprising a central hole (58) which forms at least the said inlet hole (44) and at least the said discharge hole (46).

3. Device for limiting the flow of a lubricant in accordance with Claim 1 in which the inlet hole (44) takes the form of an elongated radial slot between the outer face (38) of the partition and the cavity (42).

4. Device for limiting the flow of a lubricant in accordance with one of the Claims 1 to 3 in which the inlet (44) and discharge (46) holes have a circular form.
